# EUROPÄISCHE PATENTSCHRIFT

(11) **EP 0 739 547 B1**
(45) Veröffentlichungstag und Bekanntmachung des Hinweises auf die Patenterteilung: **12.08.1998**
(21) Anmeldenummer: 95908206.6
(22) Anmeldetag: 11.01.1995
(51) Int. Cl.: H02K 15/04

(54) **VERFAHREN UND VORRICHTUNG ZUM WICKELN VON SPULEN FÜR ELEKTRISCHE MOTOREN ODER GENERATOREN**
PROCESS AND DEVICE FOR WINDING COILS FOR ELECTRIC MOTORS OR GENERATORS
PROCEDE ET DISPOSITIF D'ENROULEMENT DE BOBINES POUR MOTEURS OU GENERATEURS ELECTRIQUES

(30) Priorität: 12.01.1994 DE 4400610; 08.02.1994 DE 4403919
(43) Veröffentlichungstag der Anmeldung: 30.10.1996
(73) Patentinhaber: STATOMAT SPEZIALMASCHINEN GMBH, D-61138 Niederdorfelden (DE)
(72) Erfinder: LEAME, Filippo, D-61137 Schöneck 1 (DE)
(74) Vertreter: Jochem, Bernd, Dipl.-Wirtsch.-Ing.
(86) Internationale Anmeldenummer: EP9500092
(87) Internationale Veröffentlichungsnummer: WO9519655

(56) Entgegenhaltungen:
- DE-C- 4 132 953
- FR-A- 2 120 897
- FR-A- 2 206 618
- GB-A- 2 080 157
- US-A- 3 514 837
- US-A- 4 610 278

## Beschreibung

Die Erfindung betrifft ein Verfahren zum Wickeln von Spulen aus Leiterdraht für elektrische Motoren oder Generatoren, insbesondere solche mit hoher Polzahl oder verteilter Wellen- oder Schleifenwicklung, indem durch einen umlaufenden Draht-Führer eine erste Spule oder Spulengruppe auf einer Schablone erzeugt, von dieser in einen Aufnehmer mit kreisförmig angeordneten Schlitzen abgestreift und durch eine Drehbewegung des Aufnehmers fortbewegt wird, und sodann ohne Drahtunterbrechung wenigstens eine weitere Spule oder Spulengruppe auf der Schablone erzeugt und auf den Aufnehmer abgestreift wird, wobei nach Beendigung des Wickelvorgangs der ersten Spule oder Spulengruppe der Draht zwischen dem Drahtführer und der Schablone von einer Zange erfaßt, zu Beginn des Wickelvorgangs der weiteren Spule oder Spulengruppe an einer Stelle im Übergangsbereich zwischen den aufeinanderfolgend gewickelten Spulen oder Spulengruppen radial außerhalb des Aufnehmers geklemmt gehalten und nach Erzeugung der letzten zusammenhängend gewickelten Spule hinter einem von ihr abstehenden Endabschnitt bestimmter Länge abgeschnitten wird. Die Erfindung betrifft weiterhin eine Vorrichtung zur Durchführung eines solchen Verfahrens.

Bei bekannten Wickelvorrichtungen ist normalerweise am Maschinenrahmen auf der einen Seite der Schablone eine Klemm- und Abschneideinrichtung und auf der anderen Seite der Schablone eine sog. Längenzieheinrichtung angebracht. Dies sind zwei verschiedene Einrichtungen mit unterschiedlichen Funktionen. Die Klemm- und Abschneideinrichtung wird nur ganz am Ende eines Wickelvorgangs gebraucht, nachdem alle zusammenhängend gewickelten Spulen oder Spulengruppen fertig gewikkelt sind und der Leiterdraht geschnitten werden muß. Die Klemm- und Abschneideinrichtung fährt dazu nach Beendigung des Wickelvorgangs in eine Greifstellung, in welcher sie den Draht empfängt, welcher sich zwischen der Schablone und dem an einer bestimmten Stelle seiner Umlaufbahn angehaltenen Drahtführer erstreckt, der üblicherweise als Flyer bezeichnet wird. Die Klemm- und Abschneideinrichtung braucht nur eine einfache Bewegung auszuführen, die sich so einstellen läßt, daß der Draht in einem bestimmten Abstand von der Schablone, d.h. mit einer bestimmten von der letzten Spule abstehenden Endlänge, geschnitten wird. Vor dem Schneidvorgang wird der Draht zwischen den Schneidorganen und dem Flyer geklemmt und solange geklemmt gehalten, bis eine neue Spule angewickelt worden ist.

In der US-A-3,514,837 ist eine Wickelvorrichtung beschrieben, mit der das eingangs bezeichnete Verfahren praktiziert wird. Die bei dieser Wickelvorrichtung vorhandene Klemm- und Abschneideinrichtung dient auch zum Klemmen des Drahtes im Bereich der sog. Zwischenpolverbindungen zwischen zusammenhängend gewickelten Spulen oder Spulengruppen. Der Draht wird jeweils nach dem Wickeln einer Spulen oder Spulengruppe und deren Abstreifen in die Schlitze des Aufnehmers neben der Schablone geklemmt und während des Anwickelns einer weiteren, ohne Drahtunterbrechung zu wickelnden Spule oder Spulengruppe geklemmt gehalten. Nachdem die letzte Spule oder Spulengruppe eines zusammenhängend gewickelt und gemeinsam in einen Stator einzuziehenden Spulensatzes gewickelt worden ist, wird der Draht auch wieder in gleicher Weise wie zuvor geklemmt, dann aber aufnehmerseitig neben der Klemmstelle abgeschnitten, bevor der nächste Wickelvorgang folgt. Um kurze Zwischenpolverbindungen zu erhalten, soll der Draht beim Anwickeln dicht neben der Schablone geklemmt gehalten werden. Diesem Bestreben sind bei der bekannten Vorrichtung jedoch Grenzen gesetzt, weil die Klemmbacken nicht in den Umriß der Schablone eindringen können und außerdem verhältnismäßig groß sind.

Die zuvor erwähnte Längenzieheinrichtung wird bei anderen Wickelvorrichtungen gebraucht, um den Draht jeweils zwischen zwei Spulen oder Spulengruppen, die zusammenhängend, d.h. ohne Drahtunterbrechung mit einer Zwischenpolverbindung gewickelt werden, vorübergehend im Übergangsbereich zu ergreifen, eine bestimmte Drahtlänge entsprechend der notwendigen Länge der Zwischenpolverbindung zu ziehen und den Draht beim Anwickeln zu klemmen. Eine derartige Längenzieheinrichtung ist zum Beispiel in der DE 30 24 219 A1 beschrieben. Je nach den herzustellenden Wicklungen muß bei den bekannten Wickelvorrichtungen die Längenzieheinrichtung mal auf der einen, mal auf der anderen Seite der Schablone am Maschinenrahmen befestigt werden. Die Umrüstung und Neueinstellung ist verhältnismäßig kompliziert und langwierig. Auch die Klemm- und Abschneideinrichtung muß entsprechend den unterschiedlichen Wickelaufgaben von der einen auf die andere Seite der Schablone umrüstbar sein.

Um die Umrüstarbeiten zu vereinfachen, ist gemäß DE 41 32 953 C1 eine kombinierte Längenzieh-, Klemm- und Abschneideinrichtung entwickelt worden. Sie besteht aus einem im Kreis um die Schablone herum verfahrbaren Greifer, welcher den sich vom Flyer zur Schablone erstreckenden Draht nach einem Wickelvorgang an verschiedenen Stellen ergreifen und, indem er den Draht nur lose umfaßt, während er auf einer bestimmten Bahn geführt wird, eine bestimmte Drahtlänge, gemessen von der Schablone bzw. zuletzt gewickelten Spule, ziehen kann, bevor der Greifer den Draht festklemmt, ggf. schneidet und an eine zum Anwickeln der nächsten Spule geeignete, vorbestimmte Stelle fährt.

Die zuletzt erwähnte, bekannte Längenzieh-, Klemm- und Abschneideinrichtung hat zwei entscheidende Mängel. Zum einen ist sie nicht in der Lage, Zwischenpolverbindungen mit der Länge Null oder minimaler Länge herzustellen, wie sie bei Motoren oder Generatoren mit sog. verteilter Wellen- oder Schleifenwicklung sowie auch bei anderen hochpoligen Motoren oder Generatoren gebraucht wird, wenn zwei ohne Drahtunterbrechung nacheinander gewickelte Spulen in dieselbe Statornut eingezogen werden sollen oder nur einen sehr geringen Umfangsabstand haben. Bei sämtlichen bekannten Längenzieheinrichtungen ergibt sich in diesen Fällen an den stirnseitig aus dem Statorblechpaket herausragenden Wicklungsköpfen eine zu lange Zwischenpolverbindung, welche gesondert festgelegt werden muß und an der es leicht zu Drahtbeschädigungen kommen kann.

Ein weiterer Nachteil aller bekannten Wickelvorrichtungen besteht darin, daß die für den von der letzten gewickelten Spule abstehenden Endabschnitt bis zur Schnittstelle benötigte Drahtlänge von der Klemm- und Abschneideinrichtung gezogen werden muß, solange sich der Draht noch zwischen dem Flver Rind der Schablone spannt. wäre der Draht schon von der Schablone in den Aufnehmer abgestreift, würde eine Relativbewegung zwischen der den Draht lose umgreifenden Klemm- und Abschneideinrichtung und dem Flyer Draht aus der zuletzt gewikkelten, nunmehr lose im Aufnehmer hängenden Spule zurückziehen.

Der Erfindung liegt zunächst die Aufgabe zugrunde, eine Wikkelvorrichtung der eingangs genannten Art zu schaffen, die in der Lage ist, minimal kurze Zwischenpolverbindungen, sogar mit der Länge Null, zu erzeugen, so daß sie bei nacheinander gewickelten Spulen, von denen jeweils zwei in eine gemeinsame Stator- oder Rotornut eingezogen werden, vollständig in die Wicklungsköpfe integriert sind.

Vorstehende Aufgabe wird nach dem Vorschlag der Erfindung verfahrensmäßig dadurch gelöst, daß der Draht zu Beginn des Wickelvorgangs der weiteren Spule oder Spulengruppe im wesentlichen auf dem Umfang der Schablone geklemmt gehalten wird. Die zur Durchführung dieses Verfahrens vorgeschlagene Vorrichtung ist in dem Anspruch 6 angegeben.

Dieser Zustand ließ sich bei den bekannten Wickelvorrichtungen nicht verwirklichen, weil die Zange der Längenzieheinrichtung, welche den Draht beim Anwickeln geklemmt hält, eine gewisse räumliche Ausdehnung hat, so daß selbst dann, wenn die Zange an die Schablone herangefahren wurde, sich die Klemmstelle des Drahts außerhalb des Umfangs der Schablone befand. Voraussetzung des vorgeschlagenen Verfahrens ist daher die erfindungsgemäße Gestaltung der Schablone mit wenigstens einer Aussparung oder Trennfuge, in welche die Zange von radial außen soweit einführbar ist, daß der Draht im wesentlichen auf dem Umfang der Schablone festklemmbar ist.

Die Schablonen haben zum Wickeln von Spulengruppen, bestehend aus mehreren konzentrischen Spulen mit unterschiedlichen Durchmessern, mehrere Stufen bzw. Kammern. Da normalerweise zunächst die unterste, kleinste Stufe der Schablone gewickelt wird und danach die Spulen auf den darüber angeordneten, zunehmend größeren Stufen erzeugt werden, genügt es, wenn nur die unterste, kleinste Schablonenstufe mit vorzugsweise zwei Aussparungen versehen ist, die sich auf gegenüberliegenden Seiten der Schablone befinden, so daß die Zange je nach Drehschaltrichtung des Aufnehmers in die eine oder die andere Aussparung der Schablone eingeführt werden kann. Wenn sich dann die Klemmstelle des Drahts beim Anwickeln einer mit der vorhergehenden zusammenhängenden Spule auf dem Umfang der kleinsten Schablonenstufe befindet und dieser mit einem Schlitz im Aufnehmer fluchtet, welcher die zuvor gewickelte Spule hält, ergibt sich auch am Übergang der Spulen keine an den Wickelköpfen in Erscheinung tretende Zwischenpolverbindung, sondern man findet nur Windungen entsprechend der Größe der Spulen.

Gerade bei hochpoligen Motoren oder Generatoren sind die Schablonen verhältnismäßig klein. Damit die Aussparung in der Schablone ebenfalls möglichst klein sein kann oder die Zange in eine schmale Trennfuge einführbar ist, weist die Zange zweckmäßigerweise als Klemmhebel zwei im wesentlichen senkrecht angeordnete Bolzen auf. Die Aussparungen in der Schablone brauchen dann nur so groß zu sein, daß sie den verhältnismäßig kleinen Querschnitt eines Bolzens aufnehmen können. Wenn sich dieser im Inneren der Aussparung und der andere Bolzen außerhalb derselben befindet, liegt die Klemmstelle zwischen den beiden Bolzen gerade auf dem Umfang der Schablone und der zwischen den Bolzen geklemmte Draht erstreckt sich längs ihres Umfangs. Die Lagerung der Bolzen kann sich unterhalb der Schablone befinden, so daß bei der Wahl der Größe der Aussparungen nur auf den Querschnitt der Bolzen Rücksicht genommen zu werden braucht.

Eine weitere der Erfindung zugrundeliegende Aufgabe besteht darin, das eingangs genannte Verfahren dahingehend weiterzuentwickeln, daß beim Ziehen einer Endlänge, welche von der letzten zusammenhängend gewickelten Spule absteht, grundsätzlich die Gefahr beseitigt wird, daß Draht aus der bereits gewickelten Spule zurückgezogen wird. Es soll damit erreicht werden, daß das Ziehen der Endlänge auch noch nach dem Abstreifen der letzten Spule von der Schablone ausgeführt werden kann.

Die zuletzt genannte Aufgabe wird erfindungsgemäß dadurch gelöst, daß zur Erzeugung einer bestimmten Länge des Endabschnitts der Draht an einer Stelle zwischen dem Drahtführer (Flyer) und der Schablone geklemmt, im geklemmten Zustand zwischen dieser ersten Klemmstelle und dem Drahtführer lose erfaßt, von dem Drahtführer und der Klemmstelle fort ausgezogen, im ausgezogenen Bereich in einem bestimmten Abstand von der ersten Klemmstelle durchtrennt und zwischen der Trennstelle und dem Drahtführer an einer zweiten Klemmstelle geklemmt wird.

Weil bei diesem neuen Verfahren die für den Endabschnitt benötigte Drahtlänge zwischen dem Flyer und einer Klemmstelle ausgezogen wird, nimmt die den Draht klemmende Zange die beim Ausziehen des Drahts auftretende Zugkraft auf. Die Zugkraft kann also nicht auf die zuletzt gewickelte Spule wirken und Draht aus dieser zurückziehen.

Die zur Durchführung des letztgenannten neuen Verfahrens vorgeschlagene Vorrichtung ist dadurch gekennzeichnet, daß die Zange und die Klemm- und Schneideinrichtung mit einem Greifer zusammenwirken, durch welchen der Draht im geklemmten Zustand der Zange zwischen dieser und dem Drahtführer (Flyer) lose erfaßbar und zur Klemm- und Schneideinrichtung ausziehbar ist. Die Zange ist vorzugsweise, aber nicht notwendigerweise eine solche, die auch zum Längenziehen von Zwischenpolverbindungen und/oder zur Herstellung von Zwischenpolverbindungen mit der Länge Null benutzt wird. Es besteht aber auch die etwas aufwendigere Möglichkeit, neben einer Längenzieheinrichtung herkömmlicher Art oder mit einer in eine Aussparung in der Schablone einführbaren Zange eine gesonderte Klemm- und Schneideinrichtung vorzusehen, welche nach dem Wickeln der letzten Spule einen von dieser abstehenden, freien Endabschnitt erzeugt und dahinter den Draht durchtrennt, und welche eine von der Längenzieheinrichtung unabhängige Zange, einen Greifer und eine weitere Klemmeinrichtung aufweist.

In bevorzugter Ausgestaltung der Erfindung wird der Greifer durch eine Rolle gebildet, welche den Draht zwischen dem Flyer und der Zange erfaßt und auf der einen Seite der Rolle gegen eine Schneidkante und unmittelbar anschließend auf der anderen Seite der Rolle gegen einen Klemmblock drückt. Zweckmäßigerweise hat der Klemmblock eine ausreichende Länge und ist geriffelt, so daß nach dem Durchtrennen des Drahts an der Schneidkante die Rolle ihn vollständig bis zum geschnittenen Ende auf dem geriffelten Klemmblock ausrollen und dadurch ein ganz gerades, bis zum äußersten Ende geriffeltes Drahtende erzeugen kann. Bisher wurde der Draht nur an einer Klemmstelle zwischen zwei Klemmbacken geriffelt und war an seinem äussersten Ende ungeriffelt und gekrümmt. Die Riffelung des vorderen Drahtendes einer Spule dient der Identifikation bei der Herstellung der elektrischen Anschlüsse.

Ein Ausführungsbeispiel der Erfindung wird nachstehend anhand der beiliegenden Zeichnung näher erläutert. Es zeigen:
- Fig. 1: eine Seitenansicht einer Wickelvorrichtung mit einer fest am Maschinenrahmen angebrachten, kombinierten Längenzieh-, Schneid- und Klemmeinrichtung;
- Fig. 2: einen schematischen horizontalen Querschnitt durch die Wickelvorrichtung nach Fig. 1, welcher die Lage der Zange der Längenzieh-, Klemm- und Schneideinrichtung relativ zur Schablone und dem Aufnehmer zeigt;
- Fig. 3: eine Draufsicht auf eine Spulenlage einer vielpoligen Wicklung, bei welcher die Zwischenpolverbindungen die Länge Null haben;
- Fig. 4: eine Seitenansicht in größerem Maßstab der Längenzieh-, Klemm- und Schneideinrichtung der Vorrichtung nach Fig. 1;
- Fig. 5: eine Draufsicht auf die Klemm- und Führungszange der Längenzieh-, Klemm- und Schneideinrichtung nach Fig. 4;
- Fig. 6: ein abgewandeltes Ausführungsbeispiel in einer Ansicht entsprechend Fig. 4.

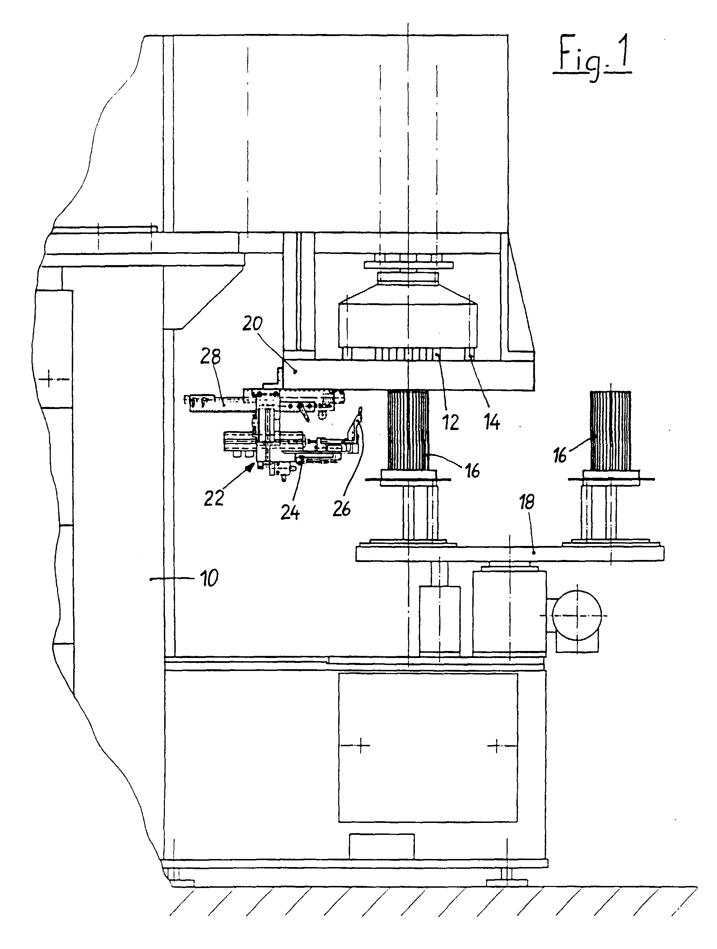

Die in Fig. 1 gezeigte Wickelvorrichtung für Spulen elektrischer Maschinen hat einen grundsätzlich seit langem bekannten Aufbau. An einem Maschinenrahmen 10 ist eine mit ihrem freien Ende nach unten weisende Schablone 12 undrehbar befestigt. Um die Schablone rotiert ein nachstehend in üblicher Weise als Flyer bezeichneter Drahtführer 14. Es handelt sich um eine Führungsdüse, über welche Draht von einer nicht gezeigten Vorratstrommel abgezogen wird. Der aus der Düse austretende Draht wickelt sich um die Schablone 12 und bildet auf deren Umfang eine Spule bzw. im Falle einer aus mehreren Stufen bzw. Kammern bestehenden Schablone eine Spulengruppe. Nachdem auf diese Weise auf der Schablone eine Spule oder Spulengruppe mit einer bestimmten Anzahl Windungen erzeugt worden ist, wird sie durch nicht gezeigte, in senkrechter Richtung verfahrbare Abstreifer nach unten von der Schablone abgestreift.

Unterhalb der Schablone 12 ist ein Aufnehmer 16 angeordnet, der aus einem Kranz von Stäben besteht und um die senkrechte Mittellängsachse drehschaltbar ist. Die Windungen der Spulen fallen in die für sie vorgesehenen Schlitze zwischen den Stäben des Aufnehmers 16. Dies kann teilweise auch bereits während des Wickelvorgangs geschehen.

Jeweils, nachdem eine Spule oder Spulengruppe vollständig von der Schablone 12 in den Aufnehmer 16 abgestreift worden ist, wird er schrittweise weitergedreht, und dann wird eine neue Spule oder Spulengruppe auf die Schablone gewickelt und in einer anderen Stellung am Umfang auf den Aufnehmer 16 abgestreift. Nachdem auf diese Weise die vorgesehene Anzahl Spulen erzeugt und auf den Aufnehmer 16 übertragen worden ist, wird er z.B. mittels eines Drehtischs 18 aus der Stellung unter der Schablone 12 wegbewegt und zu einer Einziehstation oder Einziehvorrichtung gebracht, wo die Spulen in bekannter Weise unmittelbar aus dem Aufnehmer 16 axial in die Nuten eines aufgesetzten Statorblechpakets (bzw. Rotorblechpakets eines sog. Außenläufers) eingezogen werden, wenn es sich bei dem Aufnehmer 16 um ein Einziehwerkzeug handelt. Wenn er stattdessen eine Übertragungszange ist, werden die Spulen aus dieser zunächst auf ein Einziehwerkzeug übertragen, aus dem sie dann axial in die Nuten des Statorblechpakets eingezogen werden. Sobald ein mit Spulen beladener Aufnahmer 16 unter der Schablone 12 weggefahren wird, führt der Drehtisch 18 sofort wieder einen leeren Aufnehmer 16 unter die Schablone 12, und dann wiederholt sich der vorstehend beschriebene Vorgang.

Zum Maschinenrahmen 10 gehört ein die Schablone 12 und den Flyer 14 umgebender, ringförmiger Rahmenteil 20, an dem eine insgesamt mit 22 bezeichnete Längenzieh-, Klemm- und Schneideinrichtung befestigt ist. Sie besteht aus einem unteren, gesteuert dreidimensional beweglichen Teil 24, welcher einer bisher gebräuchlichen Längenzieheinrichtung vergleichbar ist und an seinem vorderen Ende eine Zange 26 aufweist, die je nach Schließstellung den in sie eingelegten Draht lose umgreifen und dabei führen oder festklemmen kann. Ein mit 28 bezeichneter oberer Teil der Einrichtung 22 enthält eine Klemm- und Schneideinrichtung sowie einen Greifer. Diese Teile werden später im einzelnen näher erläutert.

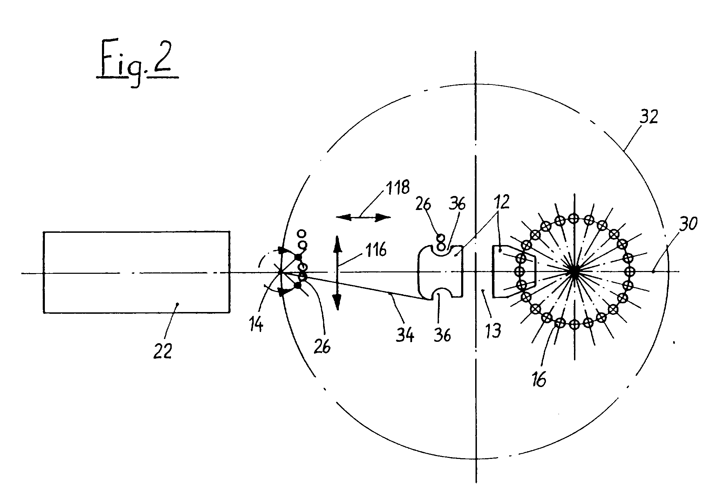

Fig. 2 zeigt die Stellung der Schablone 12, des Aufnehmers 16 und der Zange 26 in senkrechter Projektion. Die Schablone 12 ist mit einer senkrechten Trennfuge 13 längs geteilt, so daß sich eine vordere und eine hintere Schablonenhälfte ergibt. Die vordere Schablonenhälfte übergreift den Aufnehmer 16 und ist während des Wickel- und Abstreifvorgangs mit diesem in Eingriff. Die hintere Schablonenhälfte kann durch horizontale Bewegung längs der in Fig. 2 eingetragenen Mittellinie 30 mehr oder weniger weit von der vorderen Schablonenhälfte entfernt eingestellt werden, um für Statoren mit gleichem Blechschnitt, aber unterschiedlicher Pakethöhe Spulen mit entsprechend unterschiedlichem Querschnitt zu erzeugen.

Wie aus Fig. 2 hervorgeht, fallen die von der Schablone 12 abgestreiften Spulenwindungen in zwei Schlitze des Aufnehmers 16, die durch drei Stäbe des Aufnehmers 16 voneinander getrennt sind. Es sei angenommen, daß sich beim Wickeln der Spule der Flyer 14 mit Bezug auf Fig. 2 auf der strichpunktiert angedeuteten Umlaufbahn 32 im Uhrzeigersinn bewegt hat. Der Flyer 14 wurde dann nach diesem ersten Wickelvorgang auf der durch die Mittelpunkte der Schablone 12 und des Aufnehmers 16 gezogenen Mittellinie 30 auf der dem Aufnehmer 16 gegenüberliegenden Seite der Schablone 12 in der in Fig. 2 gezeigten Position angehalten. In dieser Stellung erstreckt sich der mit 34 bezeichnete Draht vom Flyer 14 zu der in der Ansicht nach Fig. 2 unteren hinteren Kante des hinteren Teils der quer zur Mittellinie 30 geteilten Schablone 12. Es sei weiterhin angenommen, daß nach dem Abstreifen der zuerst gewickelten Spule von der Schablone 12 in den Aufnehmer 16 dieser ebenfalls im Uhrzeigersinn gedreht wird, und zwar um denjenigen Winkel, welcher dem Umfangsabstand von drei Schlitzen im Aufnehmer 16 entspricht. Dann befindet sich der Aufnehmerschlitz, welcher mit der in Fig. 2 unteren Fläche des vorderen Teils der Schablone 12 fluchtete, nunmehr in Flucht mit der oberen Fläche des vorderen Teils der Schablone.

Bei Beendigung des Wickelvorgangs der ersten Spule nimmt die Zange 26 im geöffneten Zustand eine Stellung auf der Mittellinie 30 nahe dem Flyer 14 zwischen diesem und der Schablone 12 ein. Durch eine axiale Relativbewegung zwischen dem Flyer 14 und der Zange 26 wird der Draht 34 in die Zange 26 eingeführt, und diese schließt sich in eine den Draht lose umgreifende Führungsstellung. Nach dem vollständigen Abstreifen der Spulenwindungen von der Schablone wird während des Indexierens des Aufnehmers 16 die Zange 26 in gleicher Drehrichtung mitgeführt, d.h. mit Bezug auf Fig. 2, ausgehend von der Stellung auf der Mittellinie 30, nach oben und nach rechts. Außerdem wird die Zange 26 an diejenige Seite des hinteren Teils der Schablone 12 herangeführt, die in Fig. 2 oben liegt. Dort befindet sich in der Schablone 12 eine Aussparung 36, in welche die Zange 26 soweit eingeführt werden kann, daß sich der in der Zange 26 geführte Draht auf der Umfangsfläche der Schablone oder in deren Flucht dicht darunter befindet. In dieser Stellung wird der Draht von der Zange 26 geklemmt. Er erstreckt sich nunmehr nach der Indexierung des Aufnehmers 16 von der Klemmstelle in der Zange 26 längs der in Fig. 2 obenliegenden Seite der Schablone 12 zu der in der Darstellung nach Fig. 2 jetzt oberhalb der Schablone 12 im Aufnehmer 16 hängenden Spule. Wie aus Fig. 2 ersichtlich, könnte die Zange 26 statt in die Aussparung 36 auch in die Trennfuge 13 eingeführt werden.

Anschließend beginnt das Wickeln der nächsten Spule, wobei der Flyer 14 entgegen dem Uhrzeigersinn umläuft. Weil zu Beginn dieses Wickelvorgangs der Draht unmittelbar an der Umfangsfläche der Schablone 12 geklemmt gehalten wird, ist die erste Drahtwindung dieser Spule nicht länger als die nachfolgend auf der Schablone 12 erzeugten Windungen, und da diese nach Beendigung des Wickelvorgangs in denselben Aufnehmerschlitz eingeführt werden, der bereits die erste Spule hält und sich beim Wickeln der zweiten Spule an der in Fig. 2 oberen Fläche des vorderen Teils der Schablone 12 befindet, ergibt sich nach dem Einziehen der Spulen in ein Statorblechpaket eine Zwischenpolverbindung mit der Länge Null, d.h. diese tritt im Vergleich zu den übrigen Spulenwindungen und Wicklungsköpfen nicht als Überlänge in Erscheinung.

Vorzugsweise hat der hintere Teil der Schablone 12 gemäß Fig. 2 zwei mit Bezug auf die Mittellinie 30 gegenüberliegende Aussparungen 36, so daß je nach der Richtung der Drehschaltbewegung des Aufnehmers 16 die Zange 26, ausgehend von der Ausgangsstellung neben dem auf der Mittellinie 30 angehaltenen Flyer 14, in die eine oder die andere der beiden Aussparungen 36 eingeführt werden kann.

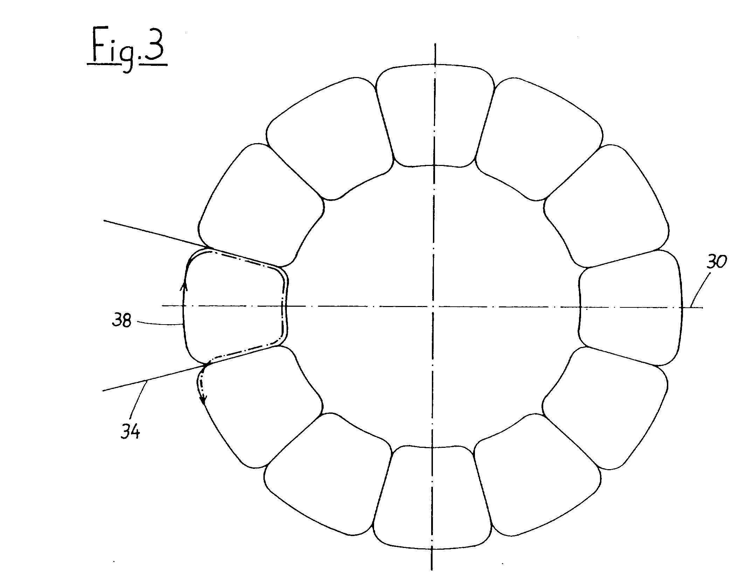

Es entsteht auf diese Weise im Aufnehmer 16 die in Fig. 3 gezeigte Anordnung von Spulen. Es sei allerdings angenommen, daß nach dem ersten Wickelvorgang zunächst nur die im Uhrzeigersinn gewickelte, links auf der Mittellinie 30 gezeigte Spule 38 existiert. Nach dem Indexieren des Aufnehmers 16 um eine Spulenteilung geht beim Wickeln der nächsten Spule mit entgegengesetzter Umlaufrichtung des Flyers 14 der in Fig. 3 strichpunktiert angedeutete Draht der letzten Spulenwindung der ersten Spule unmittelbar in die erste Windung der nächsten Spule über, wobei die Zwischenpolverbindung zwischen den beiden Spulen die Länge Null hat. Dieses Ergebnis läßt sich nur erreichen, wenn, wie in Fig. 2 gezeigt, der Draht beim Anlauf des Wickelvorgangs der zweiten und jeder weiteren Spule unmittelbar an der Umfangsfläche der Schablone 12 geklemmt gehalten wird.

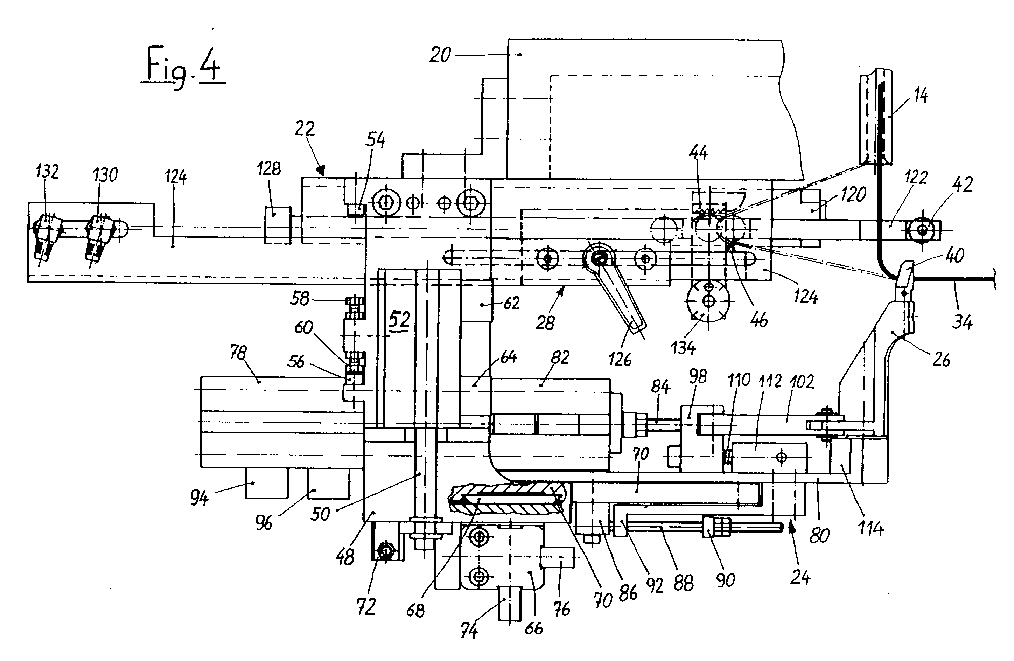

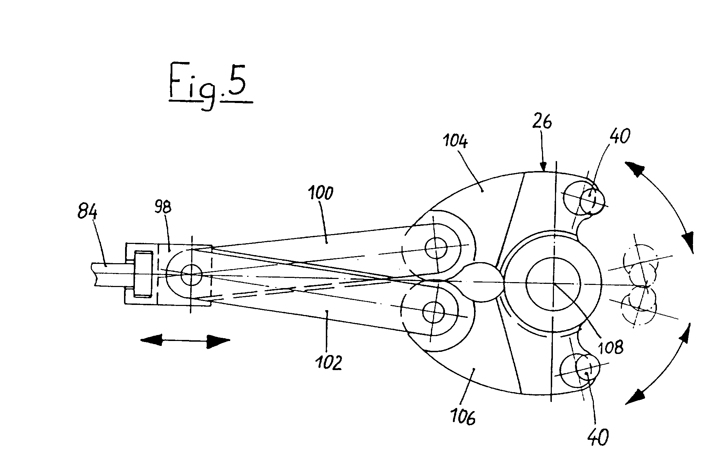

Es versteht sich, daß die Einrichtung 22 mit der gesteuert beweglich geführten Zange 26, welche den Draht 34 je nach der momentanen Situation durch loses Umgreifen führen oder festklemmen kann, je nach der auszuführenden Wickelaufgabe auch Zwischenpolverbindungen mit einer ganz bestimmten Länge erzeugen kann, indem nach dem Wickeln einer Spule relativ zum Flyer und der Schablone bestimmte Bewegungen ausgeführt und dann der Draht an einer bestimmten Stelle, die nicht auf dem Umfang der Schablone liegt, festgeklemmt wird. Hierbei kann auch gegebenenfalls eine Bewegung des Flyers zu Hilfe genommen werden, um Draht durch die in loser Führungsstellung gehaltene Zange zurückzuziehen. Die Ausgestaltung der zum Klemmen des Drahts benutzten Zange 26 derart, daß auch eine halbgeschlossene Stellung möglich ist, in welcher der Draht nur lose umfaßt und geführt wird, so daß er durch die Zange hindurchgleiten kann, ist grundsätzlich bekannt. Die Zange 26 der hier beschriebenen Vorrichtung hat jedoch die Besonderheit, daß ihr den Draht führender und klemmender Teil aus zwei im wesentlichen senkrecht aufragenden Bolzen 40 (siehe Fig. 4 und 5) besteht, die in dem horizontalen Querschnittsbereich, in welchem der Draht 34 geklemmt wird, einen verhältnismäßig kleinen Querschnitt haben, so daß auch die Aussparungen 36 in der Schablone 12, in die jeweils auch nur einer der beiden Bolzen 40 eingeführt werden muß, entsprechend klein sein können. Die im horizontalen Querschnitt größere Lagerung der Bolzen 40 bleibt unterhalb der Schablone 12. Zu beachten ist auch, daß bei der Befestigung der Einrichtung 22 auf der Mittellinie 30 gemäß Fig. 2 und der Ausrichtung des Klemmspalts zwischen den Bolzen 40 der Zange 26 parallel zur Mittellinie 30 in der Klemmstellung beim Anwickeln der Klemmspalt in Flucht mit den sich parallel zur Mittellinie 30 erstreckenden Seitenflächen der Schablone 12 liegt.

Mit Vorteil läßt sich die Zange 26 nicht nur zur Herstellung von Zwischenpolverbindungen, ggf. mit der Länge Null, nutzen, sondern auch nach dem Wickeln sämtlicher zusammenhängender Spulen zur Herstellung eines von der letzten Spule abstehenden Draht-Endabschnitts. Hierbei wirkt die Zange 26 mit einem Greifer 42, einer weiteren Klemmeinrichtung 44 und einer Schneidkante 46 zusammen, die am oberen Teil 28 der Einrichtung 22 angebracht sind.

Um die Zange 26 dreidimensional führen zu können, sind drei in senkrecht zueinander stehenden Richtungen verfahrbare Träger vorgesehen. Zu ihrer Unterscheidung sei die sich mit Bezug auf Fig. 4 von oben nach unten erstreckende Richtung als Z-Richtung bezeichnet, die sich von rechts nach links erstreckende Richtung als Y-Richtung und die sich senkrecht zur Zeichenebene erstreckende Richtung als X-Richtung. Ein in Z-Richtung verschieblicher Träger 48 ist mit der in Z-Richtung verfahrbaren Kolbenstange 50 eines als Z-Zylinder 52 bezeichneten, am Maschinenrahmen 10, 20 befestigten Kraftzylinders verbunden. Durch fest am Maschinenrahmen 10, 20 angebrachte Anschläge 54 und 56, die mit einstellbaren Anschlägen 58 und 60 am Z-Träger 48 zusammenwirken, ist dessen Weg in Z-Richtung nach beiden Seiten begrenzt. Das Erreichen der Endstellungen wird durch Initiatoren 62 und 64 der Steuerung der Maschine gemeldet.

Am Z-Träger 48 ist mit sich in X-Richtung erstreckender Mittellängsachse ein als X-Zylinder 66 bezeichneter Kraftzylinder befestigt. Außerdem ist auf einer Führung 68 auf dem Z-Träger ein mit der Kolbenstange des X-Zylinders 66 verbundener X-Träger 70 in X-Richtung verschieblich geführt. Bei 72 ist einer der beiden die Bewegung des X-Trägers nach beiden Seiten begrenzenden Anschläge gezeigt. Die bei Erreichen der Endstellungen des X-Trägers ansprechenden Initiatoren sind bei 74 und 76 angedeutet.

Auf dem X-Träger 70 ist ein Y-Zylinder 78 mit sich in Y-Richtung erstreckender Mittellängsachse befestigt. Außerdem ist auf einer Führung des X-Trägers 70 ein Y-Träger 80 in Y-Richtung verschieblich geführt. Er trägt an dem mit Bezug auf Fig. 4 rechten vorderen Ende die Zange 26 und links einen Spannzylinder 82, der über eine Kolbenstange 84 die Zange 26 betätigt. Ein am X-Träger 70 angebrachter fester Anschlag 86 sowie ein ebenfalls am X-Träger 70 mittels einer Gewindestange 88 angebrachter, einstellbarer Anschlag 90 wirken mit einem zwischen diesen beiden Anschlägen 86 und 90 beweglichen, am Y-Träger 80 fest angebrachten Vorsprung 92 zusammen und begrenzen den Weg des Y-Trägers 80 nach beiden Seiten. Dabei begrenzt der einstellbare Anschlag 90 die Bewegung der Zange 26 zum Aufnehmer 16 hin. Die Y-Richtung stimmt mit der Richtung der Mittellinie 30 in Fig. 2 überein. Das Erreichen der Endstellungen des Y-Trägers 80 wird durch zwei Initiatoren 94 und 96 der Steuervorrichtung der Maschine gemeldet.

Der Antrieb der Zange 26 geht aus Fig. 5 in Verbindung mit Fig. 4 hervor. Danach ist das vordere Ende der Kolbenstange 84 mit einem längs des Y-Zylinders 80 in Y-Richtung verschieblich geführten Lagerkörper 98 verbunden, an welchem die hinteren Enden zweier entgegengesetzt schräg zur Bewegungsrichtung der Kolbenstange 84 angeordneter Schubstangen 100 und 102 schwenkbar gelagert sind. Die Zange 26 besteht aus zwei im wesentlichen winkelförmigen Hebeln 104 und 106, die um eine gemeinsame, sich in Z-Richtung, d.h. vertikal erstreckende Achse 108 drehbar gelagert sind. Diese kreuzt die Verlängerung der Mittellängsachse der Kolbenstange 84. An den hinteren Enden der horizontalen Schenkel der winkelförmigen Hebel 104 und 106 sind die schräg angeordneten Schubstangen 100 bzw. 102 schwenkbar gelagert. Die oberen Enden der sich im wesentlichen vertikal erstreckenden Schenkel der winkelförmigen Hebel 104 und 106 tragen die Bolzen 40, welche aus der in Fig. 5 in ausgezogenen Linien gezeigten geöffneten Stellung der Zange 26 in die strichpunktiert gezeigte Klemmstellung zusammengeführt werden, wenn die Hebel 104 und 106 durch die Kolbenstange 84 über die Schubstangen 100 und 102 relativ zu der fest am Y-Träger angeordneten Achse 108 mit Bezug auf Fig. 5 nach rechts verschoben und dabei um die Achse 108 verschwenkt werden.

Mit dem Lagerkörper 98 ist über eine Feder 110, in Y-Richtung eng begrenzt beweglich, ein Anschlagkörper 112 verbunden. Die feste Klemmstellung der Bolzen 40 wird erreicht, nachdem der Anschlagkörper 112 gegen einen fest am Y-Träger angebrachten Anschlag 114 gestoßen und die Feder 110 zusammengedrückt worden ist, so daß nunmehr der Anschlagkörper 112 die weitere Bewegung des Lagerkörpers 98 mit Bezug auf Fig. 4 nach rechts begrenzt. In dieser Stellung der Teile klemmen die Bolzen 40 den Draht 34 zwischen sich ein. Wenn nun der Druck im Spannzylinder 82 wieder um einen bestimmten Wert reduziert wird, drückt zunächst die Feder 110, die sich über den Anschlagkörper 112 am Anschlag 114 abstützt, den Lagerkörper 98 ein eng begrenztes Maß nach links zurück, wodurch sich der Abstand zwischen den beiden Bolzen geringfügig um soviel vergrößert, daß sie den Draht 34 nicht mehr festklemmen, sondern nur noch in einem in den Bolzen 40 ausgebildeten Zangenmaul (nicht gezeigt) lose führen, so daß der Draht zwar nicht nach oben aus dem Zangenmaul herausgezogen werden kann, aber in dem Zangenmaul gleiten kann.

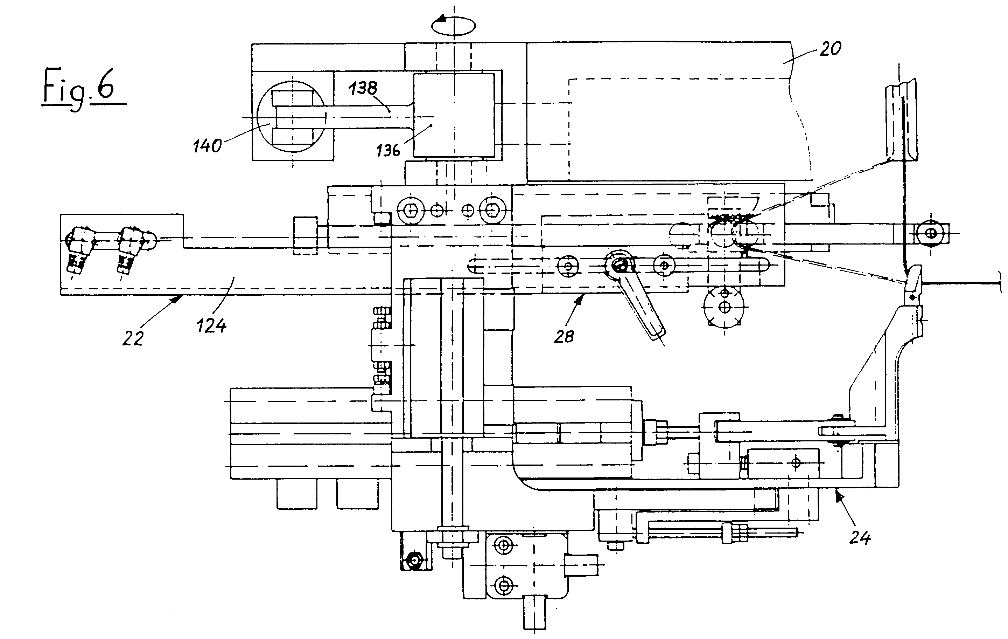

Aus der vorstehenden Beschreibung geht hervor, daß durch Bewegung des Z-Trägers 48 die Zange 26 in vertikaler Richtung, d.h. von unten nach oben zur Drahtaustrittsdüse des Flyers 14 hin und zurück bewegt werden kann. Durch Verschiebung des X-Trägers 70 erfolgt eine Bewegung der Zange 26 in Richtung des Doppelpfeils 116 in Fig. 2 quer zur Mittellinie 30, und durch Verfahren des Y-Trägers 80 wird die Zange 26 entsprechend dem Doppelpfeil 118 in Fig. 2 parallel zur Mittellinie 30 bewegt. Der geschilderte dreidimensionale Antrieb der Zange 26 kann noch dadurch ergänzt werden, daß gemäß Fig. 6 ein Drehantrieb zum gesteuerten Drehen des Z-Trägers 48 vorgesehen wird.

Der obere Teil 28 der Einrichtung 22 besteht aus einem fest am Maschinenrahmen 10, 20 angebrachten Kraftzylinder 120, dessen Kolbenstange sich in Y-Richtung erstreckt und bei einem Vorsprung 128 mit einer gleichgerichteten Stange 122 verbunden ist, die an ihrem mit Bezug auf Fig. 4 rechten vorderen Ende als Greifer 42 eine um eine horizontale Querachse drehbare Rolle trägt. wie aus Fig. 4 ersichtlich, ist die Rolle 42 nach rechts bis über den Flyer 14 und die Zange 26 hinaus auszufahren, wenn sich der Flyer 14 in der in Fig. 2 gezeigten Stellung befindet und der Y-Träger 80 in seine linke Endstellung zurückgezogen worden ist.

Die linke Endstellung des Greifers 42 ist einstellbar. Zu diesem Zweck weist der obere Teil 28 der Einrichtung 22 ein längliches Tragteil 124 auf, welches relativ zum Maschinenrahmen 10, 20 in Y-Richtung geführt verstellbar und in der gewünschten Stellung mittels eines Klemmhebels 126 festlegbar ist. Nahe dem rechten Ende des Tragteils 124 sind an diesem der klemmblock 44 und die Schneidkante 46 fest angebracht. Durch Verstellen des Tragteils 124 wird der Abstand des Klemmblocks 44 und der Schneidkante 46 vom Flyer 14 und von der Zange 26 wahlweise vergrößert oder verkleinert. Man kann auf diese Weise das gewünschte Längenmaß für die jeweils herzustellenden, von den Spulen abstehenden Draht-Endabschnitte einstellen. Am linken Ende des Tragteils 124 befinden sich zwei mit dem Vorsprung 128 an der Stange 122 zusammenwirkende Initiatoren 130 und 132, von denen der erste die Steuervorrichtung anspricht, wenn die den Greifer 42 bildende Rolle soweit nach links verfahren worden ist, daß der von der Rolle 42 mitgezogene Draht 34 in der in Fig. 4 strichpunktiert gezeigten Lage an dem sich von der Rolle zur Zange 26 erstrekkenden unteren Strang mittels der Rolle an der Schneidkante 46 durchtrennt und an dem sich vom Flyer zur Rolle 44 erstreckenden Strang zwischen der Rolle und dem Klemmblock 44 geklemmt worden ist. Der zweite Initiator 132 spricht an und veranlaßt die Beendigung des Verschiebens der Stange 122 nach links, nachdem sich die Rolle 42 auf dem Weg nach links an dem Klemmblock 44 vorbeibewegt hat, so daß dasjenige Drahtende, welches sich nach dem Durchtrennen des Drahts an der Schneidkante 46 zwischen dem Klemmblock 44 und dem Flyer 14 erstreckte, freigegeben ist.

Wie in Fig. 4 angedeutet, ist die Klemmfläche des Klemmblocks 44 geriffelt. Wenn sich die Rolle 42 bei der Bewegung der Stange 122 nach links an dem Klemmblock 44 vorbeibewegt, bewirkt sie zweierlei: erstens wird das äußerste freie Ende des zum Flyer 14 führenden Drahtabschnitts, welches im Moment des Durchtrennens um die Rolle 42 gebogen ist, gestreckt. Zweitens wird die Riffelung des Klemmblocks 44 auf das letzte Ende des zum Flyer 14 führenden Drahtabschnitts übertragen, so daß man mit den Fingerspitzen die Riffelung am gestreckten Drahtende spüren kann. Die Klemmwirkung und die Tiefe der Riffelung im Draht kann durch Feineinstellung der Höhe des klemmblocks 44 relativ zum horizontalen Weg der Rolle 42 eingestellt werden. Die Einstellung erfolgt im Beispielsfall mittels einer drehbaren Stellscheibe 134 über Gewinde und Keilflächen.

Wenn nach dem Wickeln einer bestimmten Anzahl zusammenhängender Spulen der Draht geschnitten und der mit Spulen beladene Aufnehmer 16 von der Schablone 12 entfernt werden soll, hält der Flyer 14 in der in Fig. 2 gezeigten Stellung vor der Einrichtung 22 auf der Mittellinie 30 an. Bei ganz nach links zurückgezogenem Y-Träger 80 befindet sich die Zange 26 in weit geöffnetem Zustand auf der Mittellinie 30 ein wenig rechts vom Flyer 14. Der Greifer 42 befindet sich mit seiner Rolle gleichfalls auf der Mittellinie 30 rechts vom Flyer 14. Wenn jetzt beim Abstreifen der letzten Spulenwindungen von der Schablone 12 der Flyer 14 zusammen mit den nicht gezeigten bekannten Abstreifern an der Schablone 12 nach unten fährt, führt er den Draht 34 zwischen die Bolzen 40, d.h. in die geöffnete Zange 26 ein, die danach schließt. Die Anordnung kann auch umgekehrt so getroffen sein, daß der Flyer 14 auf seinem Niveau bleibt und die Zange 26 durch Betätigung des Z-Zylinders 42 soweit angehoben wird, daß sie mit den beim Anheben an der Kolbenstange 122 und der Rolle 42 vorbeibewegten Bolzen 40 den Draht 34 neben dem Flyer 14 erfassen und festklemmen kann. Nach dem Klemmen des Drahts 34 fahren der Flyer 14 oder die Zange 26 in vertikaler Richtung wieder auseinander, so daß sich der in Fig. 4 gezeigte vertikale Abstand zwischen ihnen ergibt, wobei sich der Greifer 42 auf einem Niveau zwischen ihnen befindet.

Das Erfassen und Klemmen des Drahts 34 mittels der Zange 26 in der vorstehend beschriebenen Weise auf der Mittellinie 30 findet ebenso statt, wenn am Übergang von einer zur nächsten zusammenhängend zu wickelnden Spule der Draht nur vorübergehend geklemmt und zur Bildung einer Zwischenpolverbindung geführt werden soll, wie oben im Zusammenhang mit Fig. 2 näher beschrieben. Es wird in diesem Fall lediglich der Greifer 42 nicht nach rechts bis über den Flyer 14 hinaus ausgefahren.

Betrachtet man weiter die Funktion der Vorrichtung im Zusammenhang mit der Herstellung von Draht-Endabschnitten bestimmter Länge Heim Abschneiden des Drahts, folgt im nächsten Schritt das Zurückziehen des Greifers 42 nach links. Seine Rolle erfaßt dabei den Draht 34 etwa auf halber Höhe zwischen der Klemmstelle in der Zange 26 und der Austrittsöffnung des Flyers 14. Der Draht wird zu der in Fig. 4 strichpunktiert gezeichneten Schlaufe mit einem oberen und einem unteren Strang gezogen. Hierbei ergibt sich der Vorteil, daß das Ausziehen der Drahtschlaufe keine Auswirkung auf die zuletzt gewickelte Spule haben kann, weil der Draht in der Zange 26 geklemmt ist. Es kann also kein Draht aus der zuletzt gewickelten Spule zurückgezogen werden, d.h. das Ausziehen der Endabschnitte mittels des Greifers 42 kann gleichzeitig oder nach dem Abstreifen der zuletzt gewickelten Spule von der Schablone stattfinden, so daß die Taktzeit der Produktion verkürzt werden kann.

Der Klemmblock 44 ist mit Bezug auf die Schneidkante 46 so angeordnet, daß beim Zurückziehen des Greifers 42 nach links zunächst der Draht an der Schneidkante 46 durchtrennt wird, bevor er zwischen der Rolle und dem Klemmblock 44 eingeklemmt wird. Unmittelbar im Anschluß daran hält der Kraftzylinder 120 den Greifer 42 an, und die Zange 26 öffnet. Das mit der zuletzt gewickelten Spule verbundene Drahtende ist neben der Schnittstelle praktisch nicht gebogen, weil es sich im Moment des Schneidens im wesentlichen gradlinig zwischen der Zange 26 und der Schneidkante 46 erstreckt. Dieses Drahtende ist neben der Schnittstelle auch nicht geriffelt, also an seinem glatten Zustand als das hintere Ende der zusammenhängend gewickelten Drahtspulen zu erkennen. Diese werden nach dem Öffnen der Zange 26 zusammen mit dem sie haltenden Aufnehmer 16 von der Schablone 12 entfernt.

Der sich vom Flyer 14 zum Klemmblock 44 erstreckende Drahtabschnitt bleibt während dieser Zeit immer noch zwischen der Rolle des Greifers 42 und dem geriffelten Klemmblock 44 festgeklemmt. Erst nachdem ein neuer, leerer Aufnehmer 16 unter die Schablone 12 gebracht worden ist und der Flyer 14 die ersten Windungen einer neuen Spule auf der Schablone 12 erzeugt hat, wird der Greifer 42 bis in seine linke Endstellung zurückgezogen, wobei das geklemmt gehaltene äußerste Drahtende durch die Rolle des Greifers 42 am Klemmblock 44 gestreckt und geriffelt wird. An dieser Riffelung erkennt man später den vorderen Endabschnitt der Spulen.

Es ist ohne weiteres verständlich, daß für die zuletzt beschriebene Funktion der Bildung von Draht-Endabschnitten bestimmter Länge die Form der Zange 26 unerheblich ist. Wesentlich ist nur, daß überhaupt zwischen einem den Draht ausziehenden Greifer 42 und der zuletzt gewickelten Spule eine den Draht geklemmt haltende Zange vorhanden ist, so daß kein Draht aus der Spule zurückgezogen werden kann. Die im Zusammenhang mit Fig. 4 beschriebene Vorrichtung läßt sich daher auch mit einer Zange 26 realisieren, die nicht gemäß Fig. 2 teilweise in eine Aussparung in der Schablone 12 einführbar ist. Es können also auch Zangen 26 Anwendung finden, wie sie bisher zur Bildung von Zwischenpolverbindungen bestimmter Länge benutzt worden sind.

Es ist weiterhin verständlich, daß dieselbe Funktion erreicht werden kann, wenn auch in umständlicherer Weise, wenn nicht der Greifer 42 mit seiner Rolle sowohl im Zusammenwirken mit dem Klemmblock 44 Teil einer Klemmeinrichtung als auch im Zusammenwirken mit der Schneidkante 46 Teil einer Schneideinrichtung ist. Die Anordnung kann z. B. auch so getroffen sein, daß ein Greifer den Draht einer messer- oder scherenartigen Schneideinrichtung zuführt, die ihn durchtrennt, und weiterhin einer beispielsweise aus zwei Klemmbacken bestehenden Klemmeinrichtung zuführt.

Die in Fig. 6 gezeigte Ausführung unterscheidet sich von der nach Fig. 1 und 4 nur dadurch, daß die gesamte Einrichtung 22 um eine senkrechte Achse drehbar am Maschinenrahmen 10, 20 gelagert ist. Zu diesem Zweck ist derjenige Teil der Einrichtung 22, an welchem das Tragteil 124 gelagert ist und an welchem es mittels des Klemmhebels 126 festlegbar ist, mit einem drehhar am Maschinenrahmen 10, 20 gelagerten Tragkörper 136 verbunden. Dieser ist mit einem radial abstehenden Arm 138 versehen, an dessen freien Ende die Kolbenstange eines am Maschinenrahmen 10, 20 gelagerten Kraftzylinders 140 angreift. Bei Betätigung dieses kraftzylinders 140 wird somit die gesamte Einrichtung 22 um einen bestimmten Winkel um die senkrechte Drehachse des Tragkörpers 136 verschwenkt. Mittels dieser Schwenkbewegung, die zu der Längsbewegung des Greifers 42 hinzukommt, können besonders lange Draht-Endabschnitte erzeugt werden.

In weiterer Abwandlung der zuletzt beschriebenen Ausführungsform kann auch vorgesehen sein, daß mittels des Drehantriebs 136 - 140 nur der obere Teil 28 der Einrichtung 22 verschwenkt wird, während der untere Teil 24 nur die im Zusammenhang mit Fig. 4 beschriebenen dreiachsigen Bewegungen ausführt. In diesem Fall wird der Greifer 42 sowohl relativ zum Drahtführer 14 als auch relativ zur Zange 26 verschwenkt. Die Verschwenkbewegung kann daher nach dem Abstreifen der Spulen von der Schablone in den Aufnehmer bei geklemmter, ortsfest gehaltener Zange 26 erfolgen.

Schließlich ist auch noch darauf hinzuweisen, daß die Einrichtung 22 mit Oberteil 28 und Unterteil 24 nicht notwendigerweise an einem oben am Maschinenrahmen angebrachten Rahmenteil 20 befestigt sein muß. Wenigstens der untere Teil 24 der Einrichtung 22 könnte auch am unteren Teil des Maschinenrahmens gelagert sein, der den Aufnehmer 16 bzw. den Drehtisch 18 trägt.

## Patentansprüche

1. Verfahren zum Wickeln von Spulen aus Leiterdraht für elektrische Motoren oder Generatoren, insbesondere solche mit hoher Polzahl oder verteilter Wellen- oder Schleifenwicklung, indem durch einen umlaufenden Drahtführer (14) eine erste Spule (38) oder Spulengruppe auf einer Schablone (12) erzeugt, von dieser in einen Aufnehmer (16) mit kreisförmig angeordneten Schlitzen abgestreift und durch eine Drehbewegung des Aufnehmers (16) fortbewegt wird, und sodann ohne Drahtunterbrechung wenigstens eine weitere Spule oder Spulengruppe auf der Schablone (12) erzeugt und auf den Aufnehmer (16) abgestreift wird, wobei nach Beendigung des Wickelvorgangs der ersten Spule (38) oder Spulengruppe der Draht (34) zwischen dem Drahtführer (14) und der Schablone (12) von einer Zange (26) erfaßt, zu Beginn des Wickelvorgangs der weiteren Spule oder Spulengruppe an einer Stelle im Übergangsbereich zwischen den aufeinanderfolgend gewickelten Spulen oder Spulengruppen radial außerhalb des Aufnehmers (16) geklemmt gehalten und nach Erzeugung der letzten zusammenhängend gewickelten Spule hinter einem von ihr abstehenden Endabschnitt bestimmter Länge abgeschnitten wird, **dadurch gekennzeichnet, daß** der Draht (34) zu Beginn des Wickelvorgangs der weiteren Spule oder Spulengruppe im wesentlichen auf dem Umfang der Schablone (12) geklemmt gehalten wird.

2. Verfahren nach Anspruch 1, **dadurch gekennzeichnet, daß** der Draht (34) nach Beendigung des Wickelvorgangs der ersten Spule (38) oder Spulengruppe an einer Stelle lose erfaßt wird, die sich in axialer Projektion im wesentlichen zwischen dem angehaltenen Drahtführer (14) und der Mittellängsachse der Schablone (12) befindet, und anschließend je nach der Richtung der Drehbewegung der im Aufnehmer (16) hängenden Spule oder Spulengruppe die Erfassungsstelle des Drahts (34) mit gleicher Richtungskomponente an die Klemmstelle (36) am Umfang der Schablone herangeführt wird.

3. Verfahren nach dem Oberbegriff des Anspruchs 1 oder einem der Ansprüche 1 oder 2, **dadurch gekennzeichnet**, daß zur Erzeugung einer bestimmten Länge des Endabschnitts der Draht (34) an einer Stelle zwischen dem Drahtführer (14) und der Schablone (12) geklemmt, im geklemmten Zustand zwischen dieser ersten Klemmstelle und dem Drahtführer (14) lose erfaßt, von dem Drahtführer (14) und der Klemmstelle fort ausgezogen, im ausgezogenen Bereich in einem bestimmten Abstand von der ersten Klemmstelle durchtrennt und zwischen der Trennstelle und dem Drahtführer (14) an einer zweiten Klemmstelle (44) geklemmt wird.

4. Verfahren nach Anspruch 3, **dadurch gekennzeichnet**, daß sich in axialer Projektion die erste Klemmstelle im wesentlichen auf der Verbindungslinie zwischen dem nach dem letzten Wickelvorgang angehaltenen Drahtführer (14) und der Mittellängsachse der Schablone (12) befindet und der Draht (34) mit Bezug auf diese Mittellängsachse im wesentlichen radial ausgezogen wird.

5. Verfahren nach Anspruch 3 oder 4, **dadurch gekennzeichnet,** daß der Draht (34) zwischen der zweiten Klemmstelle (44) und der Trennstelle (46) gestreckt und dabei geriffelt wird.

6. Vorrichtung zur Durchführung des Verfahrens nach Anspruch 1 oder 2 mit einem um eine Schablone (12) umlaufend antreibbaren und dabei aus Draht (34) Spulen erzeugenden Drahtführer (14), einem mit kreisförmig angeordneten Schlitzen versehenen, in mehreren Drehwinkelstellungen mit der Schablone (12) axial in Eingriff zu bringenden Aufnehmer (16), in welchen die Spulen von der Schablone (12) abstreifbar sind, einer mit radialem Abstand von der Schablone (12) gelagerten, beweglich geführten Zange (26), mittels welcher der Draht (34) an bestimmten Stellen zwischen dem Drahtführer (14) und der Schablone (12) wahlweise lose umfaßbar oder festklemmbar ist, und einer Einrichtung (22) zum Klemmen und Abschneiden des Drahts (34) nach dem Wickeln mehrerer zusammenhängender Spulen oder Spulengruppen, **dadurch gekennzeichnet**, daß die Zange (26) von radial außen in wenigstens eine Aussparung (36) oder eine Trennfuge (13) der Schablone (12) soweit einführbar ist, daß der Draht (34) im wesentlichen auf dem Umfang der Schablone (12) festklemmbar ist.

7. Vorrichtung nach Anspruch 6, **dadurch gekennzeichnet**, daß die Schablone (12) in an sich bekannter Weise längsgeteilt ist und die beiden Schablonenteile in einer Längsmittelebene mit veränderlichem Zwischenabstand einstellbar sind, und daß zwischen dem Wickeln zweier zusammenhängender Spulen oder Spulengruppen der Drahtführer (14) im wesentlichen in der Längsmittelebene der Schablone (12) und des Aufnehmers (16) anhaltbar, der Draht (34) durch eine axiale Relativbewegung zwischen dem Drahtführer (14) und der ebenfalls im wesentlichen in der Längsmittelebene gehaltenen Zange (26) in diese einführbar ist und die Zange (26) in dem den Draht (34) lose umgreifenden Zustand wahlweise in eine von zwei mit Bezug auf die Längsmittelebene auf gegenüberliegenden Seiten der Schablone (12) angeordnete Aussparungen (36) oder die Trennfuge (13) einführbar ist.

8. Vorrichtung nach Anspruch 6 oder 7, **dadurch gekennzeichnet**, daß die Zange (26) von ihrem oberen freien Ende bis wenigstens zu der horizontalen Querebene, in welcher sie den Draht (34) führt oder klemmt, nur durch Bolzen (40) mit kleinem Querschnitt gebildet ist.

9. Vorrichtung nach dem Oberbegriff des Anspruchs 6 oder einem der Ansprüche 6 bis 8, **dadurch gekennzeichnet**, daß die Zange (26) und die Klemm- und Schneideinrichtung (44, 46) mit einem Greifer (42) zusammenwirken, durch welchen der Draht (34) im geklemmten Zustand der Zange (26) zwischen dieser und dem Drahtführer (14) lose erfaßbar und zur Klemm- und Schneideinrichtung (44, 46) ausziehbar ist.

10. Vorrichtung nach Anspruch 9, **dadurch gekennzeichnet**, daß beim Klemm- und Schneidvorgang die Zange (26), der Greifer (42) und die Klemm- und Schneideinrichtung (44, 46) im wesentlichen in einer gemeinsamen senkrechten Mittellängsebene der Schablone (12) und des Aufnehmers (16) derart angeordnet sind, daß die Klemm- und Schneideinrichtung (44, 46) oberhalb und mit Bezug auf die Mittellängsachse der Schablone (12) radial außerhalb der Zange (26) angeordnet ist.

11. Vorrichtung nach Anspruch 9 oder 10, **dadurch gekennzeichnet**, daß der Abstand zwischen der Zange (26) und der Klemm- und Schneideinrichtung (44, 46) einstellbar ist.

12. Vorrichtung nach einem der Ansprüche 9 bis 11, **dadurch gekennzeichnet**, daß der Greifer (42) eine Rolle mit horizontaler Drehachse aufweist, welche mit Bezug auf die Mittellängsachse der Schablone (12) in Richtung radial von innen nach außen gegen den sich vom Drahtführer (14) nach unten zur Zange (26) erstreckenden Draht (34) und weiter unter Bildung einer aus einem oberen und einem unteren Strang bestehenden Drahtschlaufe zu einer Schneidkante (46) und einem Klemmblock (44) verschieblich ist, zwischen dem und der Rolle der obere Strang einklemmbar ist, nachdem der untere Strang von der Rolle gegen die Schneidkante (46) gedrückt und durchtrennt worden ist.

13. Vorrichtung nach Anspruch 12, **dadurch gekennzeichnet**, daß der Klemmblock (44) mit einer geriffelten Oberfläche versehen und die Rolle des Greifers (42) über die zum Durchtrennen des Drahts (34) erforderliche Stellung hinaus auswärts verschiebbar ist, bis sie sich am Drahtende abgewälzt hat, wobei der Klemmblock (44) seine Riffelung in das Drahtende einprägt und dieses am Klemmblock im wesentlichen gerade ausrichtbar ist.

14. Vorrichtung nach Anspruch 12 oder 13, **dadurch gekennzeichnet**, daß der Abstand zwischen der Rolle des Greifers (42) und dem Klemmblock (44) in Klemmstellung einstellbar ist.

## Claims

1. A method of winding coils from conductor wire for electric motors or generators, in particular those with a high number of poles or distributed wave or lap winding, by producing with a rotating wire guide (14) a first coil (38) or group of coils on a template (12), stripping it therefrom in a receiving member (16) with slots arranged in a circle and moving it on by a rotating motion of the receiving member (16), and then without interruption in the wire at least one other coil or group of coils is produced on the template (12) and is stripped into the receiving member (16), wherein at the end of the winding process of the first coil (38) or group of coils the wire (34) is gripped between the wire guide (14) and the template (12) by pliers (26), at the start of the winding process of the other coil or group of coils is held clamped at a location in the transition zone between the successively wound coils or group of coils radially outside the receiving member (16), and after the formation of the last coherently wound coil is cut off behind an end portion of given length projecting therefrom, characterised in that at the start of the winding process of the other coil or group of coils the wire (34) is held clamped substantially on the periphery of the template (12).

2. A method according to Claim 1, characterised in that at the end of the winding process of the first coil (38) or group of coils the wire (34) is loosely gripped at a location which in axial projection is situated substantially between the arrested wire guide (14) and the central longitudinal axis of the template (12), and subsequently depending on the direction of the rotating movement of the coil or group of coils suspended in the receiving member (16) the gripping location of the wire (34) is brought with the same directional component up to the clamping location (36) on the periphery of the template.

3. A method according to the preamble of Claim 1 or either Claim 1 or Claim 2, characterised in that to produce a given length of the end portion the wire (34) is clamped at a location between the wire guide (14) and the template (12), is loosely gripped in the clamped condition between this first clamping location and the wire guide (14), is withdrawn from the wire guide (14) and the clamping location, in the withdrawn region is severed at a given distance from the first clamping location and is clamped at a second clamping location (44) between the separation point and the wire guide (14).

4. A method according to Claim 3, characterised in that in axial projection the first clamping location is situated substantially on the connecting line between the wire guide (14) arrested after the last winding operation and the central longitudinal axis of the template (12), and the wire (34) is withdrawn substantially radially in relation to this central longitudinal axis.

5. A method according to Claim 3 or 4, characterised in that the wire (34) is stretched between the second clamping location (44) and the separation point (46) and is thus grooved.

6. An apparatus for carrying out the method according to Claim 1 or 2 having a wire guide (14) which can be driven to rotate about a template (12) and thus produces coils from wire (34), a receiving member (16) which is provided with circularly disposed slots and which can be brought axially into engagement with the template (12) in a plurality of angular rotational positions, in which the coils can be stripped from the template (12), movably guided pliers (26) which are mounted at a radial distance from the template (12) and by means of which the wire (34) can alternatively be loosely gripped or securely clamped at given locations between the wire guide (14) and the template (12), and a device (22) for clamping and cutting off the wire (34) after the winding of a plurality of coherent coils or groups of coils, characterised in that the pliers (26) can be introduced radially from the outside into at least one recess (36) or a separating joint (13) of the template (12) to such an extent that the wire (34) can be clamped substantially on the periphery of the template (12).

7. An apparatus according to Claim 6, characterised in that the template (12) is divided longitudinally in per se known manner and the two template parts are adjustable in a longitudinal central plane with variable interspacing, and in that between the winding of two coherent coils or groups of coils the wire guide (14) can be arrested substantially in the longitudinal central plane of the template (12) and of the receiving member (16), the wire (34) can be inserted into the pliers (26), which are also held substantially in the longitudinal central plane, by an axial relative movement between the wire guide (14) and the pliers, and in the position in which they loosely grip the wire (34) the pliers (26) can be alternatively introduced into one of two recesses (36) arranged in relation to the longitudinal central plane on opposite sides of the template (12) or into the separating joint (13).

8. An apparatus according to Claim 6 or 7, characterised in that from their upper free end up to at least the horizontal transverse plane in which they guide or clamp the wire (34) the pliers (26) are formed only by pins (40) of small cross-section.

9. An apparatus according to the preamble of Claim 6 or any one of Claims 6 to 8, characterised in that the pliers (26) and the clamping and cutting means (44,46) co-operate with a gripper (42), by means of which in the clamped condition of the pliers (26) the wire (34) can be loosely gripped between the latter and the wire guide (14) and can be withdrawn towards the clamping and cutting means (44,46).

10. An apparatus according to Claim 9, characterised in that during the clamping and cutting operation the pliers (26), the gripper (42) and the clamping and cutting means (44,46) are so arranged substantially in a common perpendicular central longitudinal plane of the template (12) and of the receiving member (16) that the clamping and cutting means (44,46) is disposed above the pliers (26) and radially outside the latter in relation to the central longitudinal axis of the template (12).

11. An apparatus according to Claim 9 or 10, characterised in that the distance between the pliers (26) and the clamping and cutting means (44,46) is adjustable.

12. An apparatus according to any one of Claims 9 to 11, characterised in that the gripper (42) has a roller with a horizontal axis of rotation, which in relation to the central longitudinal axis of the template (12) is displaceable radially from the inside outwards against the wire (34) extending from the wire guide (14) downwards towards the pliers (26) and is further displaceable, forming a wire loop comprising an upper and a lower strand, towards a cutting edge (46) and a clamping block (44), between which and the roller the upper strand can be clamped after the lower strand has been pressed by the roller against the cutting edge (46) and severed.

13. An apparatus according to Claim 12, characterised in that the clamping block (44) is provided with a grooved surface and the roller of the gripper (42) is displaceable outwards beyond the position required for severing the wire (34) until it has rolled on the wire end, whereupon the clamping block (44) impresses its grooves into the wire end and the latter can be aligned substantially straight on the clamping block.

14. An apparatus according to Claim 12 or 13, characterised in that the distance between the roller of the gripper (42) and the clamping block (44) in the clamping position is adjustable.

## Revendications

1. Procédé pour enrouler des bobines de fils conducteurs pour des moteurs ou des génératrices électriques, en particulier des machines qui présentent un nombre élevé de pôles ou des enroulements ondulés ou des enroulements imbriqués parallèles répartis, en produisant, au moyen d'un guide-fil (14) tournant, une première bobine (38) ou un premier groupe de bobines sur un gabarit (12), à partir duquel on le tire dans un dispositif de réception (16) avec des fentes disposées en forme de cercle puis on le fait avancer par un mouvement de rotation du dispositif de réception (16), de sorte qu'on produit alors, sans interruption du fil, au moins une autre bobine ou un autre groupe de bobines sur le gabarit (12), et on le tire sur le dispositif de réception (16), le fil (34), après la fin du processus d'enroulement de la première bobine (38) ou du groupe de bobines étant saisi entre le guide-fil (14) et le gabarit (12) par une pince (26), le fil (34) étant maintenu serré radialement en dehors du dispositif de réception (16) au début du processus d'enroulement de l'autre bobine ou groupe de bobines, à un endroit qui se trouve dans la zone de passage située entre les bobines ou groupes de bobines enroulées les unes à la suite des autres, et le fil étant coupé, après la production de la dernière bobine enroulée de facon continue, au bout de la section finale d'une longueur déterminée partant d'elle,
caractérisé en ce que
le fil (34) est maintenu serré essentiellement sur le pourtour du gabarit (12) au début du processus d'enroulement de l'autre bobine ou groupe de bobines.

2. Procédé selon la revendication 1,
caractérisé en ce que
- le fil (34)est saisi de façon lâche après la fin du processus d'enroulement de la première bobine (38) ou groupe de bobines, en un endroit qui se situe essentiellement, en projection axiale, entre le guide-fil (14) retenu et l'axe longitudinal central du gabarit (12), et
- l'on fait passer ensuite, selon le sens du mouvement de rotation de la bobine ou du groupe de bobines accroché dans le dispositif de réception, le point de saisie du fil (34) avec la même composante directionnelle à l'endroit du serrage (36), sur le pourtour du gabarit.

3. Procédé selon le préambule de la revendication 1, ou l'une des revendications 1 ou 2,
caractérisé en ce que
pour produire une longueur déterminée de la section finale du fil (34), on serre le fil (34) en un endroit situé entre le guide-fil (14) et le gabarit (12), on le saisit de façon lâche dans sa position serrée entre ce premier endroit de serrage et le guide-fil (14), on le fait avancer en le tirant du guide-fil (14) et du point de serrage, on le coupe dans la zone d'étirement à une distance déterminée du premier endroit de serrage, et on le serre entre le point de séparation et le guide-fil (14) en un deuxième endroit de serrage (44).

4. Procédé selon la revendication 3,
caractérisé en ce que
le premier endroit de serrage, en projection axiale, se situe sensiblement sur la ligne de liaison entre le guide-fil (14) retenu après le dernier processus d'enroulement, et l'axe longitudinal central du gabarit (12), et l'on tire le fil (34) sensiblement radialement par rapport à cet axe longitudinal central.

5. Procédé selon la revendication 3 ou 4,
caractérisé en ce que
le fil (34) est étiré entre le deuxième endroit de serrage (44) et l'endroit de sa séparation (46), et il est dans ce cas strié.

6. Dispositif pour la mise en oeuvre du procédé selon la revendication 1 ou 2, comprenant un guide-fil (14) qui peut être entraîné en tournant autour d'un gabarit (12) et qui produit dans ce cas des bobines à partir du fil (34), un dispositif de réception (16), pourvu de fentes disposées en forme de cercle, à mettre axialement en prise avec le gabarit (12) dans plusieurs positions angulaires de rotation, dispositif de réception dans lequel les bobines peuvent être tirées du gabarit (12), une pince (26) montée à une certaine distance radiale du gabarit (12), qui est guidée de façon mobile et au moyen de laquelle le fil (34) peut être entouré de façon lâche ou serré fortement au choix en des endroits déterminés situés entre le guide-fil (14) et le gabarit (12), et un dispositif (22) qui sert à serrer et à couper le fil (34) après l'enroulement de plusieurs bobines ou groupes de bobines de façon continue,
caractérisé en ce que
l'on peut introduire la pince (26) radialement de l'extérieur dans au moins un évidement (36) ou un joint (13) du gabarit (12), jusqu'à ce que le fil (34) puisse être serré sensiblement sur le pourtour du gabarit (12).

7. Dispositif selon la revendication 6,
caractérisé en ce que
- le gabarit (12) est divisé dans le sens de la longueur d'une manière connue en soi, et les deux parties du gabarit peuvent être réglées dans un plan central longitudinal avec un intervalle variable, et
- entre l'enroulement de deux bobines ou groupes de bobines reliées en continu, le guide-fil (14) peut être retenu sensiblement dans le plan central longitudinal du gabarit (12) et du dispositif de réception (16), le fil (34) peut être introduit par un mouvement axial relatif entre le guide-fil (14) et la pince (26) maintenue également sensiblement dans le plan central longitudinal, dans celle-ci, et la pince (26) peut être introduite, dans la position où elle entoure le fil (34) de façon lâche, dans l'un des deux évidements (36) disposés, par rapport au plan central longitudinal, sur les côtés opposés du gabarit (12) ou dans le joint (13).

8. Dispositif selon la revendication 6 ou 7,
caractérisé en ce que
la pince (26) est formée depuis son extrémité supérieure libre jusqu'à au moins son plan transversal horizontal dans lequel le fil (34) passe ou est serré, seulement par des goujons (40) ayant une petite section transversale.

9. Dispositif selon le préambule de la revendication 6 ou l'une des revendications 6 à 8,
caractérisé en ce que
la pince (26) et le système de serrage et de coupe (44, 46) coopèrent avec un préhenseur (42) au moyen duquel on peut saisir de façon lâche le fil (34), quand la pince (23) est en position serrée entre celle-ci et le guide-fil (14), et on peut le tirer vers le dispositif de serrage et de coupe (44, 46).

10. Dispositif selon la revendication 9,
caractérisé en ce que
lors du processus de serrage et de coupe, la pince (26), le préhenseur (42) et le dispositif de serrage et de coupe (44, 46) sont disposés sensiblement dans un plan longitudinal central perpendiculaire commun du gabarit (12) et du dispositif de réception (16), d'une manière telle que le dispositif de serrage et de coupe (44, 46) soit disposé au dessus de la pince (26) et radialement à l'extérieur de celle-ci par rapport à l'axe longitudinal central du gabarit (12).

11. Dispositif selon la revendication 9 ou 10,
caractérisé en ce que
la distance entre la pince (26) et le système de serrage et de coupe (44, 46) est réglable.

12. Dispositif selon l'une des revendications 9 à 11,
caractérisé en ce que
- le préhenseur (42) présente un galet avec un axe horizontal de rotation, qui peut coulisser, par rapport à l'axe longitudinal central du gabarit (12), radialement dans le sens qui va de l'intérieur vers l'extérieur, contre le fil (34), qui s'étend, à partir du guide-fil (14), vers le bas en direction de la pince (26), et ensuite en formant une boucle consistant d'un brin supérieur et d'un brin inférieur, vers une arête de coupe (46) et un bloc de serrage (44),
- le brin supérieur peut être serré entre celui-ci et le galet une fois que le brin inférieur a été pressé par le galet contre l'arête de coupe (46) et coupé.

13. Dispositif selon la revendication 12,
caractérisé en ce que
le bloc de serrage (44) est muni d'une surface striée et le galet du préhenseur (42) peut coulisser vers l'extérieur au-delà de la position nécessaire à la coupe du fil (34), jusqu'a ce que le galet ait roulé à l'extrémité du fil, le bloc de serrage (44) imprimant ses striures dans l'extrémité du fil, et celui-ci pouvant être sensiblement dirigé en ligne droite.

14. Dispositif selon la revendication 12 ou 13,
caractérisé en ce que
la distance entre le galet du préhenseur (42) et le bloc de serrage (44) dans la position de serrage peut être réglée.
